# EUROPEAN PATENT SPECIFICATION

(11) **EP 2 962 907 B1**
(45) Date of publication and mention of the grant of the patent: **31.01.2018**
(21) Application number: 14002282.3
(22) Date of filing: 03.07.2014
(51) Int. Cl.: B60R 22/46

(54) **SEAT BELT RETRACTOR**
SICHERHEITSGURTAUFROLLER
RÉTRACTEUR DE CEINTURE DE SÉCURITÉ

(43) Date of publication of application: 06.01.2016
(73) Proprietor: TRW Automotive GmbH, 73553 Alfdorf (DE); TRW Polska Sp.z.o.o., 42-200 Czestochowa (PL)
(72) Inventor: Kaskosz, Michal, 42-244 Mstów (PL)
(74) Representative: ZF TRW Patentabteilung

(56) References cited:
- WO-A1-2011/148772
- DE-A1-102006 005 434
- JP-A- 2011 162 157
- US-A1- 2005 284 976

## Description

The invention relates to a seat belt retractor with a rotatable belt spool, a reversible belt drive adapted for rotating the belt spool in a winding and unwinding direction, and a belt tensioner adapted for rotating the belt spool in a winding direction.

The main purpose of the seat belt retractor is to provide to a vehicle occupant a seat belt with which the occupant can be restrained to a vehicle seat under certain conditions of the vehicle During normal operation, the seat belt can be withdrawn from the retractor so as to allow the vehicle occupant to lean forward, and can be taken up in the seat belt retractor in order to avoid an excessive slack of the seat belt. This can be done passively under the action of a winding spring which acts onto the belt spool with a certain winding torque. It is also possible to actively control the winding and unwinding by using the reversible belt drive for appropriately rotating the belt spool. The reversible belt drive typically employs an electric motor for rotating the belt spool both in the winding and in the unwinding direction.

The reversible belt drive can also be used for a so-called pretensioning which consists in applying an elevated tension to the seat belt, for example during sharp braking maneuvers or cornering at high speeds. The elevated tension within the seat belt is removed once the underlying vehicle condition has ceased to exist.

Beyond the pretensioning, there is provided the possibility to tighten the seat belt at much higher force levels. This is done by means of the belt tensioner which typically employs a pyrotechnic charge which, when fired, makes available a considerable amount of energy within a short time.

In case the belt tensioner is activated and the belt spool is being rotated in the winding direction, there is the issue that the reversible belt drive still is connected to the belt spool. While the belt tensioner in theory has enough power to not only rotate the belt spool in the winding direction but also the reversible belt drive, the winding under the effect of the belt tensioner is performed so quickly that the rotational inertia of the reversible belt drive results in the destruction of one of the components of the reversible belt drive. While this is no issue from the point of lifetime (the belt retractor cannot be reused anyhow after activation of the belt tensioner), the unpredictability of what happens at the level of the reversible belt drive after activation of the belt tensioner is undesirable.

US 2005/028 49 76 A1 describes a belt retractor with a reversible belt drive for driving the belt spool in the winding and in the unwinding direction. A pyrotechnical tensioner is foreseen to drive the belt spool in the winding direction. The reversible belt drive and the pyrotechnical tensioner are arranged on the same side of the belt spool. A separating element is foreseen which disconnects the reversible belt drive from the belt spool when the pyrotechnical tensioner is activate.

WO2011/148772 A1 shows a seat belt retractor with a reversible belt drive and a power transmission means for transmitting the drive torque of a motor to the belt spool. A clutch connects or disconnects this power transmission path.

JP 2011 162 157 A describes a belt retractor corresponding to the preamble of claim 1. The object of the invention is to improve the known seat belt retractor such that there is no issue with the reversible belt drive after activation of the belt tensioner.

In order to solve this object, the invention provides a seat belt retractor having the features of claim 1. The pinion is in particular part of the drive flow path from the reversible belt drive to the belt spool. Thus, the releasable drive connection does not need extra space.

According to the preferred embodiment, the pinion has an outer drive provided with gears meshing with a gear drive which is part of the reversible belt drive, and an inner ring provided with a drive toothing connected to the belt spool. This allows a compact design.

Preferably, the predetermined breaking point Is embodied as webs extending with a predetermined wall thickness between the inner and the outer rings. The webs can very easily transfer the torque of the reversible belt drive up to a level which is typically encountered during normal operation of the seat belt retractor, but can yield when subjected to higher torque.

Preferably, the webs extend in a radial direction. This allows setting the torque level at which the webs break, in a very precise manner.

According to a preferred embodiment, each web extends in a plane which contains the axis of rotation of the pinion. Such configuration allows manufacturing the pinion with reduced expenditure in a molding process.

In view of a good centering effect between the inner and the outer ring, it is preferred that at least three webs are provided. Preferably, not more than twelve webs are provided as an excessive number of webs makes it hard to properly control the level at which the webs break.

According to a preferred embodiment of the invention, each web is provided with an enlarged root towards the inner ring, an enlarged head towards the outer ring, and with a predetermined thin wall thickness between the root and the head. This design results in a concentration of load at the point of the web where there is the thin wall thickness, ensuring that the wall breaks at the set level of load.

Preferably, the pinion is formed from a brittle material, in particular from polyamide resin with glass fiber filing (PA+GF). A brittle material ensures that there is a sudden release of the drive connection between the reversible belt drive and the belt spool when the predetermined level of torque is achieved, rather than there being a plastic deformation of the associated components.

The invention will now be described with reference to an embodiment which is shown in the enclosed drawings. In the drawings,
- Figure 1 shows a seat belt retractor according to the invention in a perspective view;
- Figure 2 shows in a perspective, schematic view parts of the reversible belt drive and the belt tensioner of the seat belt retractor of Figure 1;
- Figure 3 shows at an enlarged scale parts of the reversible belt drive of the seat belt retractor of Figure 1;
- Figure 4 shows at an enlarged scale an end of the belt spool which is engaged both by the reversible belt drive and the belt tensioner; and
- Figure 5 shows in a perspective view the pinion used for connecting the reversible belt drive to the belt spool.

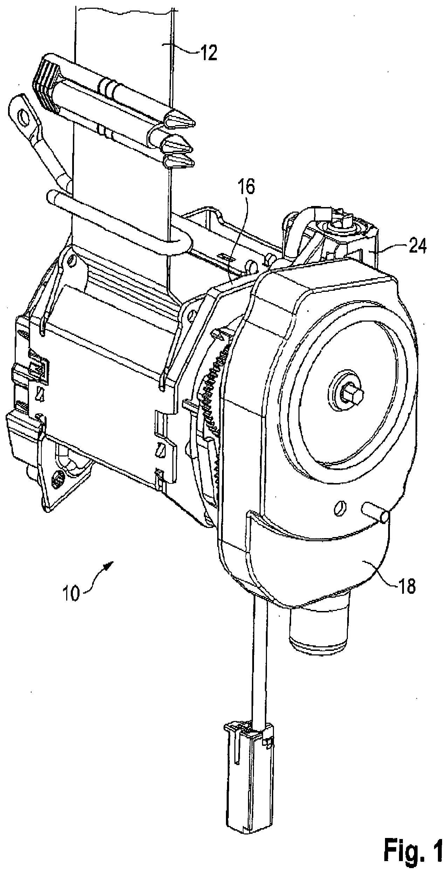

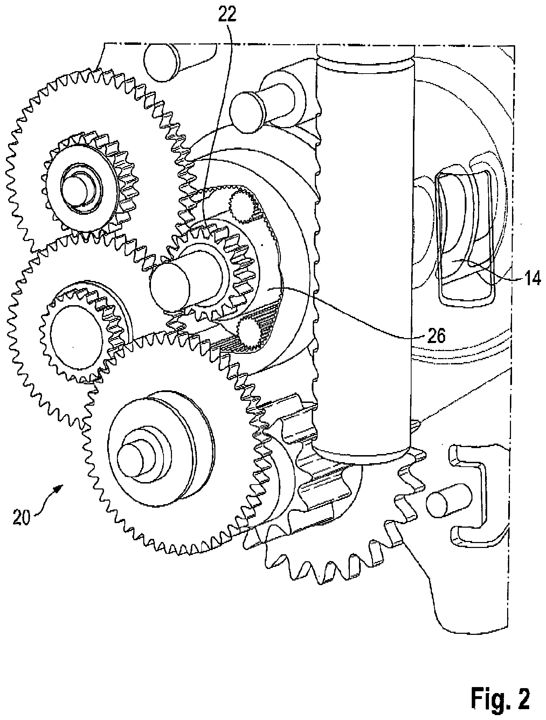

In Figure 1, a belt retractor 10 is shown which is provided for presenting a seat belt 12 to a vehicle occupant in a vehicle. Seat belt 12 is wound on a belt spool 14 (please see Figure 2) which is rotatably mounted in a frame 16 of the belt retractor.

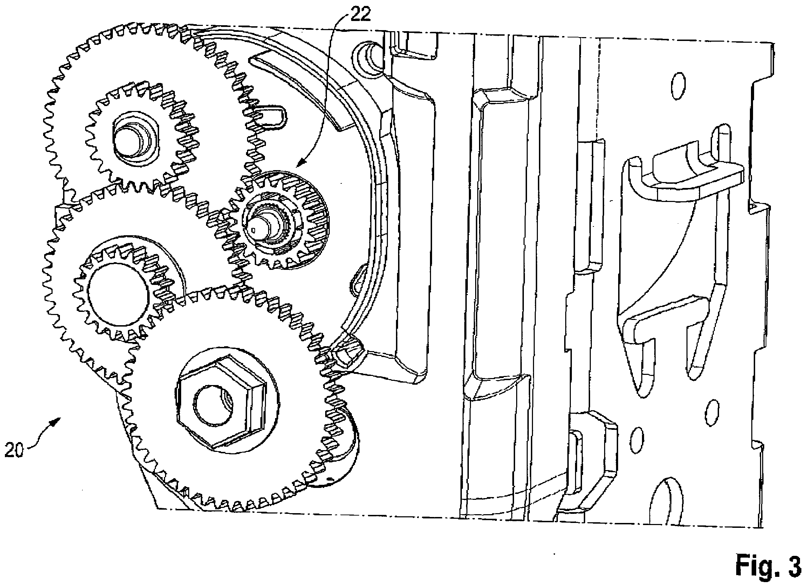

A reversible belt drive 18 is provided for rotating belt spool 14 in a winding and in an unwinding direction. To this end, a motor spring with curvilinear gears (not shown) is provided which is connected via a gear drive 20 (please see in particular Figures 2 and 3) to a pinion 22 which is connected in a non-rotatable manner to belt spool 14. As an alternative, an electric motor can be used for driving the belt spool.

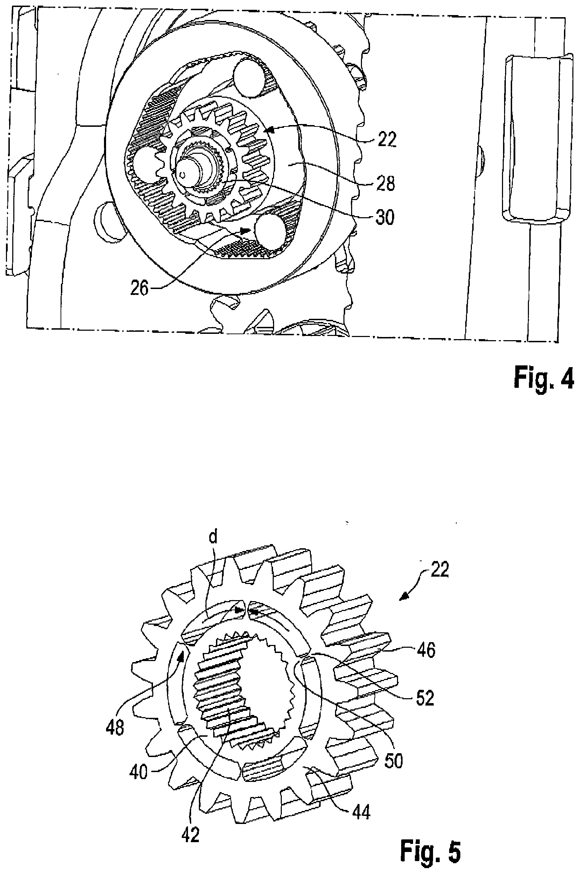

In addition to reversible belt drive 18, a belt tensioner 24 is provided which is connected via a coupling 26 (please see in particular Figure 2) to belt spool 14. As can be seen in particular in Figure 4, coupling 26 is arranged so as to be able to engage at a cylindrical drive portion 28 formed integrally with or connected to belt spool 14 while pinion 22 is arranged adjacent to drive portion 28 on a drive portion 30 which has a smaller diameter as compared to drive portion 28.

Pinion 22 is formed from a brittle material, in particular from polyamide resin with glass fiber filing (PA+GF) and embodies a releasable drive connection between reversible belt drive 18 and belt spool 14. As can be seen in Figure 5, pinion 22 comprises an inner ring 40 featuring a drive toothing 42 which engages on drive portion 30 of the belt spool, and an outer ring 44 provided with a plurality of gear teeth 46 adapted to mesh with an associated spur gear of gear drive 20. Rings 40, 44 are arranged concentrically and are connected to each other by means of a plurality of webs 48.

While six webs 48 are shown in Figure 5, a different number can be used. As is shown in Figure 4, a larger number of webs 48 such as nine webs can be used as well. It is also possible to employ a fewer number of webs, for example three webs.

As can be seen in Figure 5, webs 48 extend in a radial direction. Furthermore, they extend in a plane which comprises the axis of rotation of pinion 22. In theory, webs 48 could be oriented differently, for example in a helical manner. This however adds complexity to the manufacturing process.

Each web 48 has an enlarged root 50 towards inner ring 40 and an enlarged head 52 towards outer ring 44. Between the root and the head, there is a portion of the web having a predetermined minimum wall thickness d.

The minimum wall thickness d determines the amount of torque which can be transmitted between outer ring 44 and inner ring 40. This level of torque is set such that reversible belt drive 18 can drive belt spool 14 without there being a risk of the webs being damaged. Should however a torque be effective between outer ring 44 and inner ring 40 which is above a designed level of predetermined breaking, webs 48 yield such that there no longer is a drive connection between inner and outer rings 40, 44. This in particular is the case when belt tensioner 24 is being activated such that belt spool 14 is very quickly and abruptly rotated in the winding direction. The releasable drive connection provided by pinion 22 then cuts off the connection towards the releasable belt drive 18 so that the belt spool can be rotated in an unhindered manner.

## Claims

1. Seat belt retractor (10) with a rotatable belt spool (14), a reversible belt drive (18) adapted for rotating the belt spool (14) via a gear drive (20) in a winding direction and in an unwinding direction, and a belt tensioner (24) adapted for rotating the belt spool (14) via a coupling (26) in a winding direction, wherein a releasable drive connection is provided between the belt drive (18) and the belt spool (14), and wherein the coupling (26) is arranged so as to be able to engage at a cylindrical first drive portion (28) formed integrally with or connected to belt spool (14) while a pinion (22) of the gear drive (20) is arranged adjacent to the first drive portion (28) on a second drive portion (30) wherein the releasable drive connection is embodied in pinion (22), which comprises a predetermined breaking point, **characterized in that** the second drive portion (30) has a smaller diameter as compared to the first drive portion (28).

2. The seat belt retractor of claim 1 wherein the pinion (22) has an outer ring (44) provided with teeth (46) meshing with a gear drive (20) which is part of the reversible belt drive (18), and an inner ring (40) provided with a drive toothing (42) connected to the belt spool (14).

3. The seat belt retractor of claim 2 wherein the predetermined breaking point is embodied as webs (48) extending with a predetermined wall thickness (d) between the inner and the outer rings (40, 44).

4. The seat belt retractor of claim 3 wherein the webs (48) extend in a radial direction.

5. The seat belt retractor of claim 3 or claim 4 wherein each web (48) extends in a plane which contains the axis of rotation of the pinion (22).

6. The seat belt retractor of any of claims 3 to 5 wherein at least three webs (48) are provided.

7. The seat belt retractor of any of claims 3 to 6 wherein not more than twelve webs (48) are provided.

8. The seat belt retractor of any of claims 3 to 7 wherein each web (48) is provided with an enlarged root (50) towards the inner ring (40), an enlarged head (52) towards the outer ring (44), and with a predetermined thin wall thickness (d) between the root (50) and the head (52).

9. The seat belt retractor of any of claims 7 to 8 wherein the pinion is formed from a brittle material, in particular from polyamide resin with glass fiber filing (PA+GF).

## Patentansprüche

1. Sicherheitsgurtaufroller (10) mit einer drehbaren Gurtspule (14), einem umkehrbaren Gurtantrieb (18), der zum Drehen der Gurtspule (14) über ein Zahnradgetriebe (20) in einer Aufwickelrichtung und in einer Abwickelrichtung geeignet ist, sowie einem Gurtstraffer (24), der zum Drehen der Gurtspule (14) über eine Kupplung (26) in einer Aufwickelrichtung geeignet ist, wobei eine lösbare Antriebsverbindung zwischen dem Gurtantrieb (18) und der Gurtspule (14) vorgesehen ist, und wobei die Kupplung (26) so angeordnet ist, dass sie an einem zylinderförmigen ersten Antriebsabschnitt (28) angreifen kann, der einstückig mit der Gurtspule (14) ausgebildet oder mit dieser verbunden ist, während ein Antriebsrad (22) des Zahnradgetriebes (20) angrenzend an den ersten Antriebsabschnitt (28) an einem zweiten Antriebsabschnitt (30) angeordnet ist, wobei die lösbare Antriebsverbindung in dem Antriebsrad (22) verkörpert ist, das eine Sollbruchstelle umfasst, **dadurch gekennzeichnet, dass** der zweite Antriebsabschnitt (30) gegenüber dem ersten Antriebsabschnitt (28) einen kleineren Durchmesser aufweist.

2. Sicherheitsgurtaufroller nach Anspruch 1, wobei das Antriebsrad (22) einen Außenring (44), der mit Zähnen (46) versehen ist, welche in ein Zahnradgetriebe (20) eingreifen, das Teil des umkehrbaren Gurtantriebes (18) ist, und einen Innenring (40) aufweist, der mit einer mit der Gurtspule (14) verbundenen Antriebsverzahnung (42) versehen ist.

3. Sicherheitsgurtaufroller nach Anspruch 2, wobei die Sollbruchstelle als Stege (48) ausgebildet ist, welche mit einer vorgegebenen Wandstärke (d) zwischen dem Innen- und dem Außenring (40, 44) verlaufen.

4. Sicherheitsgurtaufroller nach Anspruch 3, wobei die Stege (48) in radialer Richtung verlaufen.

5. Sicherheitsgurtaufroller nach Anspruch 3 oder Anspruch 4, wobei sich jeder Steg (48) in einer Ebene erstreckt, die die Drehachse des Antriebsrades (22) enthält.

6. Sicherheitsgurtaufroller nach einem der Ansprüche 3 bis 5, wobei mindestens drei Stege (48) vorgesehen sind.

7. Sicherheitsgurtaufroller nach einem der Ansprüche 3 bis 6, wobei nicht mehr als zwölf Stege (48) vorgesehen sind.

8. Sicherheitsgurtaufroller nach einem der Ansprüche 3 bis 7, wobei jeder Steg (48) mit einer vergrößerten Wurzel (50) in Richtung des Innenrings (40), einem vergrößerten Kopf (52) in Richtung des Außenrings (44) und mit einer vorgegebenen dünnen Wandstärke (d) zwischen der Wurzel (50) und dem Kopf (52) vorgesehen ist.

9. Sicherheitsgurtaufroller nach einem der Ansprüche 7 bis 8, wobei das Antriebsrad aus einem spröden Material, insbesondere aus Polyamidharz mit Glasfaserfüllung (PA+GF), besteht.

## Revendications

1. Rétracteur de ceinture de sécurité (10) avec une bobine de ceinture rotative (14), un entrainement réversible par courroie (18) adapté pour faire tourner la bobine de ceinture (14) via une transmission par engrenage (20) dans une direction d'enroulement et de déroulement, et un tendeur de ceinture (24) adapté pour faire tourner la bobine de ceinture (14) via un accouplement (26) dans une direction d'enroulement, pour lequel une liaison d'entraînement débrayable est prévue entre l'entraînement par courroie (18) et la bobine de ceinture (14), et pour lequel l'accouplement (26) est agencé de manière à pouvoir s'engager sur une première partie d'entraînement cylindrique (28) formée intégralement avec ou reliée à une bobine de ceinture (14) tandis qu'un pignon (22) de la transmission par engrenage (20) est disposé adjacent à la première partie d'entraînement (28) sur une seconde partie d'entraînement (80) dans laquelle la liaison d'entraînement débrayable est réalisée dans un pignon (22), qui comprend un point de rupture prédéterminé, **caractérisé en ce que** la seconde partie d'entraînement (30) a un diamètre plus petit comparé à la première partie d'entraînement (28).

2. Rétracteur de ceinture de sécurité selon la revendication 1, pour lequel le pignon (22) comporte une bague extérieure (44) munie de dents (46) engrenant avec un entraînement par engrenage (20) faisant partie de la transmission réversible par courroie (18), et une bague intérieure (40) pourvue d'une denture d'entraînement (42) reliée à la bobine de ceinture (14).

3. Rétracteur de ceinture de sécurité selon la revendication 2, pour lequel le point de rupture prédéterminé est réalisé au travers de bandes (48) s'étendant avec une épaisseur de paroi prédéterminée (d) entre les bagues interne et externe (40, 44).

4. Rétracteur de ceinture de sécurité selon la revendication 3, pour lequel les bandes (48) s'étendent dans une direction radiale.

5. Rétracteur de ceinture de sécurité selon la revendication 3 ou la revendication 4, pour lequel chaque bande (48) s'étend dans un plan qui contient l'axe de rotation du pignon (22).

6. Rétracteur de ceinture de sécurité selon l'une quelconque des revendications 3 à 5, pour lequel au moins trois bandes (48) sont prévues.

7. Rétracteur de ceinture de sécurité selon l'une quelconque des revendications 3 à 6, pour lequel ne sont prévues pas plus de douze bandes (48).

8. Rétracteur de ceinture de sécurité selon l'une quelconque des revendications 3 à 7, pour lequel chaque bande (48) est pourvue d'une base élargie (50) vers la bague intérieure (40), une tête élargie (52) vers la bague extérieure (44), et avec une épaisseur de paroi mince prédéterminée (d) entre la base (50) et la tête (52).

9. Rétracteur de ceinture de sécurité selon l'une quelconque des revendications 7 à 8, pour lequel le pignon est formé d'un matériau fragile, en particulier d'une résine de polyamide avec un dépôt de fibres de verre (PA + FV).
